# EUROPEAN PATENT SPECIFICATION

(11) **EP 2 995 794 B1**
(45) Date of publication and mention of the grant of the patent: **14.03.2018**
(21) Application number: 14794160.3
(22) Date of filing: 09.05.2014
(51) Int. Cl.: F02B 25/04, F02B 23/02, F02M 21/02

(54) **UNIFLOW SCAVENGING 2-CYCLE ENGINE**
ZWEITAKTMOTOR MIT GLEICHSTROMSPÜLUNG
MOTEUR À DEUX TEMPS À BALAYAGE ÉQUICOURANT

(30) Priority: 10.05.2013 JP 2013100527
(43) Date of publication of application: 16.03.2016
(73) Proprietor: IHI Corporation, Tokyo 135-8710 (JP)
(72) Inventor: KUGE, Takahiro, Tokyo 135-8710 (JP); MASUDA, Yutaka, Tokyo 135-8710 (JP); YAMADA, Takayuki, Tokyo 135-8710 (JP); YAMADA, Takeshi, Tokyo 135-8710 (JP); KAWAI, Masafumi, Tokyo 135-8710 (JP); SHIZUYA, Ken, Tokyo 135-8710 (JP)
(74) Representative: TBK
(86) International application number: PCT/JP2014/062473
(87) International publication number: WO 2014/181867

(56) References cited:
- WO-A1-2012/018071
- DE-A1-102011 050 087
- JP-A- H06 346 737
- JP-A- H07 208 171
- JP-A- S62 129 518
- JP-A- 2010 209 464
- JP-A- 2011 122 465
- JP-A- 2012 036 780
- JP-A- 2012 154 188
- JP-A- 2012 154 189
- JP-A- 2012 167 666

## Description

### [Technical Field]

The present invention relates to a uniflow scavenging two-cycle engine which combusts a premixed gas generated by injecting a fuel gas into an active gas sucked from a scavenge port.

### [Background Art]

In a uniflow scavenging two-cycle engine (a two-stroke engine) which is also used as an engine of a vessel, a scavenge port is provided in an end portion in a stroke direction of a piston in a cylinder, and an exhaust port is provided in the other end portion side in the stroke direction of the piston in the cylinder. When an active gas is suctioned into a combustion chamber from the scavenge port in a suction (air supply) stroke, the exhaust gases generated by the combustion operation are exhausted by being pushed out of the exhaust port by the suctioned active gas. At this time, a premixed gas is generated by injecting the fuel gas into the suctioned active gas, the combustion operation is performed by compressing the generated premixed gas, and the piston reciprocates within the cylinder by the explosive pressure generated by the combustion operation.

In such a uniflow scavenging two-cycle engine, when the mixing between the fuel gas and the active gas is insufficient, the concentration of the fuel gas locally increases, and there are problems such as pre-ignition and emission of an unburned gas. Therefore, for example, as disclosed in JP 3908855 B2, a communicating hole is provided on an inner wall of the scavenge port, and a nozzle tube protrudes into the scavenge port from the communicating hole. Moreover, there is disclosed a technique for securing the mixing time of the fuel gas and the active gas in the cylinder by injecting the fuel gas into the scavenge port from the nozzle tube, and by starting the mixing between the active gas and the fuel gas before the active gas is suctioned into the cylinder.

Furthermore, a uniflow scavenging two-cycle engine according to the preamble of claim 1 is known from JP 2012 154 188 A. Moreover, JP 2011 122 465 A discloses an IC engine with two injector units.

### [Summary of invention]

### [Technical Problem]

Meanwhile, a configuration in which a plurality of injection ports of the nozzle tube protruding into the scavenge port from the communicating hole and spaced in the stroke direction of the piston are provided to uniformly diffuse the fuel gas into the active gas by suppressing the deviation of the fuel gas can be considered. Further, without being limited to such a configuration, a case in which a plurality of injection ports for injecting the fuel gas are provided on the outside of the cylinder and spaced in the stroke direction of the piston is also assumed.

When the plurality of injection ports are provided in this way and the fuel gas is simultaneously injected from the plurality of injection ports or the injection of the fuel gas from the plurality of injection ports is simultaneously stopped, there is a possibility of blow-by of the ejected fuel gas from the exhaust port depending on the injection port.

In view of such problems, an object of the present invention is to provide a uniflow scavenging two-cycle engine capable of suppressing the blow-by of the fuel gas while uniformly diffusing the fuel gas.

### [Solution to Problem]

According to the preset invention, the above object is solved by a uniflow scavenging two-cycle engine having the features of claim 1.

### [Advantageous Effects of invention]

According to the uniflow scavenging two-cycle engine of the present invention, it is possible to suppress the blow-by of the fuel gas while uniformly diffusing the fuel gas.

### [Brief Description of Drawings]

FIG. 1 is an explanatory diagram showing an overall configuration of a uniflow scavenging two-cycle engine.
FIG. 2A is a cross-sectional view of a part of the cylinder and the fuel injection unit in the same cross-section as in FIG. 1 showing the fuel injection unit.
FIG. 2B is a cross-sectional view taken along the line II(b)-II(b) of FIG. 2A.
FIG. 2C is a diagram taken from an arrow II(c) of FIG. 2B.
FIG. 3 is a diagram showing a first injection unit and a second injection unit.
FIG. 4A is a diagram showing the flow of the premixed gas in the cylinder of a comparative example.
FIG. 4B is a diagram showing the flow of the premixed gas in the cylinder of an embodiment.
FIG. 5 is a diagram showing the operation of each control unit of the embodiment.
FIG. 6A is an enlarged view of a position corresponding to FIG. 3 of a first modified example of the present invention showing a fuel injection unit of a first modified example of the present invention.
FIG. 6B is an enlarged view of a position corresponding to FIG. 3 of a second modified example of the present invention showing a fuel injection unit of a second modified example of the present invention.
FIG. 6C is a diagram corresponding to FIG. 5 of a third modified example of the present invention.

### [Description of Embodiments]

Hereinafter, preferred embodiments of the present invention will be described in detail with reference to the accompanying drawings. Dimensions, materials, and other specific numerical values shown in these embodiments are merely examples for facilitating understanding of the present invention, and unless specifically indicated otherwise, the present invention is not limited thereto. In addition, in the present specification and drawings, the elements having substantially the same functions and configurations are denoted by the same reference numerals and the repeated description thereof will not be described. Further, the elements which are not directly related to the present invention will not be shown.

### (First embodiment)

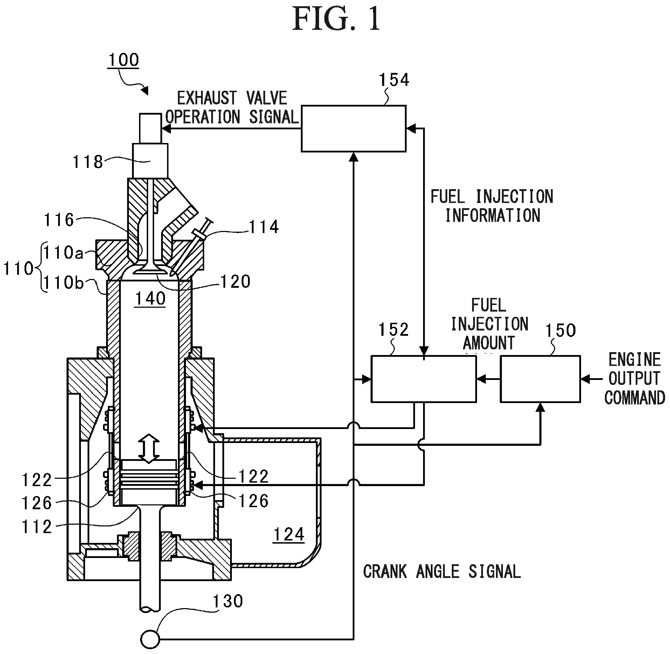

FIG. 1 is a diagram showing the entire configuration of a uniflow scavenging two-cycle engine 100. The uniflow scavenging two-cycle engine 100 of this embodiment, for example, is used in a vessel or the like. Specifically, the uniflow scavenging two-cycle engine 100 is configured to include a cylinder 110 (a cylinder head 110a and a cylinder block 110b), a piston 112, a pilot injection valve 114, an exhaust port 116, an exhaust valve driving device 118, an exhaust valve 120, a scavenge port 122, a scavenge chamber 124, a fuel injection unit 126, a rotary encoder 130 and a combustion chamber 140. The uniflow scavenging two-cycle engine 100 is controlled by a control unit such as a governor (a speed governor 150), a fuel injection control unit 152 and an exhaust control unit 154.

In the uniflow scavenging two-cycle engine 100, a piston 112 connected to a crosshead (not shown) slidably reciprocates inside the cylinder 110 through four consecutive strokes such as suction (air supply), compression, combustion and exhaust. In such a crosshead type piston 112, it is possible to form a relatively long stroke in the cylinder 110, and the crosshead can be subjected to the lateral pressure acting on the piston 112. Accordingly, it is possible to achieve a higher output of the uniflow scavenging two-cycle engine 100. Further, since the cylinder 110 is spaced apart from a crank chamber (not shown) to which the crosshead is fitted, it is possible to prevent the staining and deterioration of the crank chamber even when using a low-quality fuel oil.

A pilot injection valve 114 is provided in the cylinder head 110a above the top dead center of the piston 112, and injects an appropriate amount of fuel oil at a desired point of time in the engine cycle. Such fuel oil is spontaneously ignited by heat of the combustion chamber 140 surrounded by the cylinder head 110a, the cylinder liner in the cylinder block 110b and the piston 112, and is combusted for a short time to greatly raise the temperature of the combustion chamber 140. Therefore, it is possible to reliably combust the premixed gas containing the fuel gas at a desired timing.

The exhaust port 116 is an opening provided on the top of the cylinder head 110a above the top dead center of the piston 112, and is opened and closed to exhaust the exhaust gas after combustion has occurred in the cylinder 110. The exhaust valve driving device 118 causes the exhaust valve 120 to vertically slide at a predetermined timing to open and close the exhaust port 116. The exhaust gas exhausted through the exhaust port 116 is exhausted to the outside, for example, after being supplied to a turbine side of a turbocharger (not shown).

The scavenge port 122 is a hole which penetrates from an inner circumferential surface (an inner circumferential surface of the cylinder block 110b) of one end side in the stroke direction of the piston 112 in the cylinder 110 to the outer circumferential surface, and a plurality of scavenge ports 122 are provided over the entire periphery of the cylinder 110 to be spaced apart from one another. The scavenge port 122 sucks the active gas into the cylinder 110 in accordance with the sliding movement of the piston 112. Such an active gas includes oxygen, an oxidizing agent such as ozone or a gas in which these are mixed (e.g., air). The scavenge chamber 124 is filled with an inert gas (e.g., air) pressed by a compressor of a turbocharger (not shown), and the active gas is sucked from the scavenge ports 122 due to a differential pressure between the scavenge chamber 124 and the cylinder 110. Although the pressure of the scavenge chambers 124 can be substantially constant, when the pressure of the scavenge chamber 124 changes, a pressure gauge may be provided in the scavenge port 122 to control other parameters, such as an injection amount of the fuel gas, depending on the measured value.

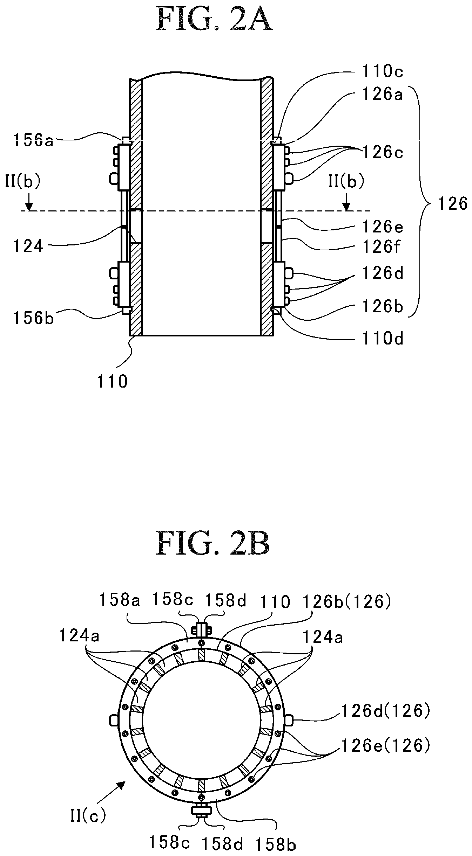

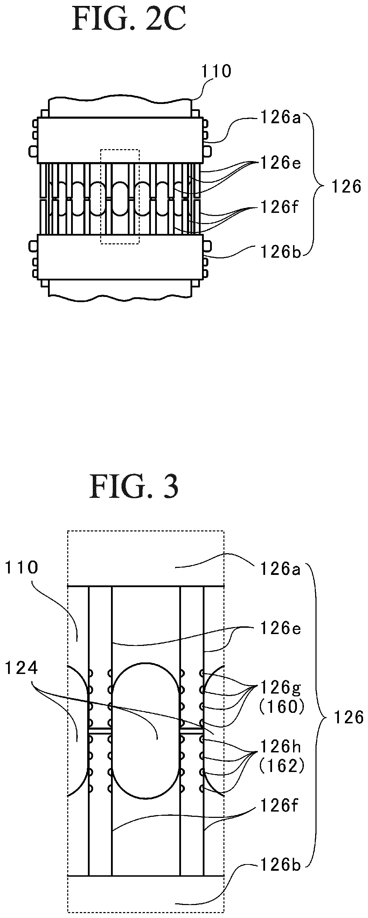

FIGS. 2A to 2C are diagrams showing a fuel injection unit 126, FIG. 2A shows a part of the cylinder 110 and the fuel injection unit 126 in the same cross-section as in FIG. 1, FIG. 2B shows a cross-section along the line II(b)-II(b) in FIG. 2A, and FIG. 2C shows a diagram taken along an arrow II(c) in FIG. 2B. In FIGS. 2A to 2C, in order to facilitate understanding, the cross-sectional structure of the fuel injection unit 126 and the piston 112 are not shown.

As shown in FIG. 2A, the fuel injection unit 126 includes mixing tubes 126a and 126b which are formed separately from the cylinder 110. Each of the mixing tubes 126a and 126b is an angular member which surrounds a radially outer side of the cylinder 110 in the circumferential direction. The mixing tube 126a is disposed on the other end side (an upper side in FIG. 2A) in the stroke direction of the piston 112 compared to the scavenge port 122, and the mixing tube 126b is disposed on one end side (a lower side of FIG. 2A) in the stroke direction of the piston 112 compared to scavenge port 122.

As shown in FIG. 2A, on the outer circumferential surface of the cylinder 110, a ring 156a is fitted into a groove 110c formed on the upper side of the mixing tube 126a, and thereby the movement of the mixing tube 126a to the upper side is restricted by the ring 156a. Similarly, on the outer circumferential surface of the cylinder 110, a ring 156b is fitted to a groove 110d formed on the lower side of the mixing tube 126b, and thereby the movement of the mixing tube 126b to the lower side is restricted by the ring 156b.

Further, as shown in FIG. 2B, the mixing tube 126b includes two members 158a and 158b which each surround half of the circumference of the cylinder 110, and protrusions 158c and 158d provided at both end portions of both of the members 158a and 158b are fastened by a chain and a nut (so-called G-coupling). In other words, the mixing tube 126b tightens the cylinder 110 from the outer side, and the vertical movement of the mixing tube 126b in FIG. 2A is also limited by the frictional force of the contact portion between the mixing tube 126b and the cylinder 110. Here, although the fixing means of the mixing tube 126b has been described, the mixing tube 126a is also fastened by the same structure as the mixing tube 126b.

An annularly extending mixing chamber is formed inside each of the mixing tubes 126a and 126b. Each mixing chamber communicates with a fuel piping (not shown) through which the fuel gas obtained by gasifying a liquefied natural gas (LNG) flows, and an active piping (not shown) through which the active gas flows. Moreover, the fuel gas from the fuel piping is mixed with the active gas from the active piping in the mixing chamber to generate a premixed gas. Here, as the fuel gas, it is possible to apply, for example, a gas obtained by gasifying liquefied petroleum gas (LPG), gas oil and heavy oil, without being limited to the LNG.

The switching valve 126c is disposed in a communicating section between the mixing chamber, the fuel piping and the active piping of the mixing tube 126a, and the switching valve 126d is disposed in a communicating section between the mixing chamber, the fuel piping and the active piping of the mixing tube 126b. When the switching valves 126c and 126d are open, the fuel gas and the active gas flow into the mixing chamber from the fuel piping and the active piping, and when the switching valves 126c and 126d are closed, the inflow of the fuel gas and the active gas into the mixing chamber from the fuel piping and the active piping is stopped. However, each of the switching valves 126c and 126d is individually controlled by the exhaust control unit 154.

As shown in FIG. 2C, circulation tubes 126e and 126f are serially disposed between the mixing tube 126a and the mixing tube 126b. One ends of the circulation tubes 126e and 126f are disposed to face to each other, the other end of the circulation tube 126e is fixed to the mixing tube 126a, and the other end of the circulation tube 126f is fixed to the mixing tube 126b. Also, as shown in FIG. 2B, the circulation tubes 126e and 126f are disposed in each partition wall 124a one by one, at a position (on the radially outer side of the partition wall 124a of the scavenge port 122), which faces the partition wall 124a provided between the adjacent scavenge ports 122, of the outer circumferential surface of the cylinder 110.

The circulation tube 126e communicates with the mixing tube 126a, and the premixed gas containing the fuel gas flowing from the mixing tube 126a is circulated. Also, the circulation tube 126f communicates with the mixing tube 126b, and the premixed gas containing the fuel gas flowing from the mixing tube 126b is circulated. In this way, independent flow passages are formed by the circulation tube 126e and the circulation tube 126f.

FIG. 3 is a diagram showing a first injection unit 126g and a second injection unit 126h, and FIG. 2C shows an enlarged view of a broken line portion. As shown in FIG. 3, a plurality of first injection units 126g are formed in the circulation tube 126e, and a plurality of second injection units 126h are formed in the circulation tube 126f. The first injection units 126g and the second injection units 126h are holes (openings) through which the inner circumferential surfaces and outer circumferential surfaces of the circulation tubes 126e and126f communicate with each other.

The first injection unit 126g and the second injection unit 126h are located on the radially outer side (the outside of the cylinder 110) of the cylinder 110 between the adjacent scavenge ports 122, and are open in the circumferential direction of the cylinder 110 from the circulation tubes 126e and 126f. Also, the respective first injection units 126g and the second injection units 126h are different from each other in the position in the stroke direction of the piston 112.

In the shown example, the first injection unit 126g and the second injection unit 126h are divided into two sets. The two sets include a set (a first injection unit group 160) of the four first injection units 126g located on the other end side in the stroke direction (the upper side in FIG. 3), and a set (a second injection unit group 162) of the four second injection units 126h located on one end side in the stroke direction (the lower side in FIG. 3), based on the boundary of the position between the mixing tube 126a and the mixing tube 126b. That is, the first injection unit group 160 and the second injection unit group 162 are different from each other in the position in the stroke direction of the piston 112.

Then, upon receiving a command from the fuel injection control unit 152 to be described later, the switching valves 126c and 126d (see FIGS. 2A to 2C) are open. The switching valves 126c and 126d are valves which open and close the flow passage of the fuel gas and the active gas supplied to the first injection unit group 160 and the second injection unit group 162. Then, the premixed gas is ejected from the first injection unit group 160 and the second injection unit group 162, which are the only openings, and the premixed gas is blown toward the active gas, which flows from the scavenge chamber 124 to the scavenge port 122, from the first injection unit group 160 and the second injection unit group 162 of the fuel injection unit 126. At this time, the vortex is generated in the active gas near the scavenge ports 122, and it is possible to promote mixing between the active gas and the premixed gas by the vortex.

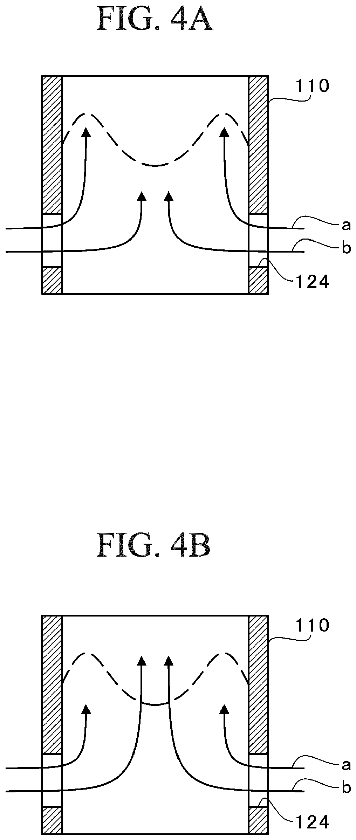

FIGS. 4A and 4B are diagrams showing the flow of the premixed gas in the cylinder 110, FIG. 4A shows the flow of the premixed gas in the comparative example, and FIG. 4B shows the flow of the premixed gas in the embodiment. In FIGS. 4A and 4B, a broken line indicates a relative speed difference of each radial position in a flow velocity of the gas in the cylinder 110, arrows a and b indicate the path of the flow of the premixed gas, and the tips of the arrows a and b indicate the top positions of the flow of the premixed gas at a predetermined timing.

For example, all the first the switching valves 126c and 126d are simultaneously open, and the premixed gas is substantially simultaneously ejected from the first injection unit group 160 and the second injection unit group 162. Then, as shown in FIG. 4A, of the scavenge port 122, the premixed gas passing through the other end side (the upper side in FIG. 4A) in the stroke direction of the piston 112 flows through the outer diameter side of the cylinder 110 (indicated by an arrow a).

Also, of the scavenge port 122, the premixed gas passing through one end side (the lower side in FIG. 4A) in the stroke direction of the piston 112 flows through the inner diameter side of the cylinder 110 (indicated by an arrow b).

At this time, although the speed of the gas in the cylinder 110 slightly drops by the influence of friction with the inner circumferential surface and the viscosity at a site close to the inner circumferential surface of the cylinder 110, in general, the rising speed is faster in the outer diameter side of the cylinder 110 than in the inner diameter side. This is because the flow velocity of the outer diameter side of the cylinder 110 is accelerated by the influence of the swirl. In addition, as shown in FIG. 1, the exhaust valve 120 is located on the inner diameter side of the cylinder 110 to face the exhaust port 116. Thus, a state in which a gap between the exhaust port 116 and the exhaust valve 120 is open to the outer diameter side of the cylinder 110 becomes a factor which accelerates the flow velocity of the outer diameter side of the cylinder 110 compared to the inner diameter side.

Therefore, in FIG. 4A, the flow velocity is faster in the premixed gas indicated by the arrow a than in the premixed gas shown by the arrow b. As a result, the top of the flow of the premixed gas indicated by the arrow a reaches the exhaust port 116 before the top of the premixed gas flow indicated by the arrow b. Thus, the speed difference of the premixed gases becomes a factor of the blow-by from the exhaust valve 120.

Meanwhile, in this embodiment, the opening timing is later in the switching valve 126c than in the switching valve 126d. That is, the injection start of the premixed gas is later in the first injection unit group 160 than in the second injection unit group 162.

Therefore, as shown in FIG. 4B, of the scavenge port 122, the premixed gas (indicated by the arrow a) passing through the other end side (the upper side in FIG. 4B) in the stroke direction of the piston 112 flows in the cylinder 110 later than the premixed gas (indicated by the arrow b) passing through one end side (the lower side in FIG. 4B) in the stroke direction of the piston 112.

As a result, the premixed gases (indicated by the arrows a and b) reach the cylinder head 110a substantially at the same timing and are combusted in the combustion chamber 140. Thus, the blow-by of the premixed gas (fuel gas) is suppressed, and a risk of the premixed gas being discharged to the exhaust system due to the blow-by and the deterioration in fuel consumption is suppressed.

Moreover, in order to suppress the blow-by, the start timing of the fuel injection from the second injection unit 126h of the second injection unit group 162 is made earlier than in the case in which the start timing of the fuel injection from both the first injection unit group 160 and the second injection unit group 162 is delayed. Therefore, it is possible to secure a long injection time of the premixed gas.

Further, in this embodiment, in addition to the timing of the injection start of the premixed gas, the timing of the injection stop also differs between the second injection unit group 162 and the first injection unit group 160. That is, the valve-closing timing is later in the switching valve 126c than in the switching valve 126d, and the injection stop of the premixed gas is later in the first injection unit 126g of the first injection unit group 160 than in the second injection unit 126h of the second injection unit group 162.

With the movement of the piston 112, the scavenge port 122 is gradually closed from one end side to the other end side. If the injection of the premixed gas from both the first injection unit group 160 and the second injection unit group 162 is stopped at the limit timing at which the premixed gas from the first injection unit group 160 can flow into the scavenge port 122, the premixed gas injected from the second injection unit group 162 may be disturbed by the piston 112 and may not flow into the cylinder 110. Then, the premixed gas stays within the scavenge port 122 or on the outside of the cylinder 110 (the scavenge chamber 124).

The premixed gas staying within the cylinder 110 or on the outside (the scavenge chamber 124) of the scavenge ports 122 flows into the cylinder 110 together with the active gas at the next time when the scavenge ports 122 are open. Then, there is a possibility of blow-by of the premixed gas from the exhaust port 116 along with the discharge of the exhaust gases.

In this embodiment, the injection stop of the premixed gas is later in the first injection unit group 160 than in the second injection unit group 162. That is, the injection stop of the premixed gas is earlier in the second injection unit group 162 than in the first injection unit group 160. Therefore, in accordance with the timing at which the scavenge ports 122 are gradually closed from one end side to the other end side, the injection of the premixed gas is stopped, and it is possible to suppress the blow-by. Moreover, a risk of the premixed gas staying within the scavenge chamber 124 is also suppressed.

Also, compared to the case in which the stop timing of the fuel injection from both the first injection unit group 160 and the second injection unit group 162 is advanced to suppress the blow-by, the stop timing of the fuel injection from the first injection unit group 160 is delayed. Therefore, it is possible to secure the long injection time of the premixed gas.

Returning to FIG. 1, a rotary encoder 130 is provided on a crank mechanism (not shown) to detect an angle signal of the crank (hereinafter referred to as a crank angle signal).

A governor 150 derives an amount of fuel injection, based on the engine output command value input from the upper controller, and the engine rotational speed obtained by the crank angle signal from the rotary encoder 130, and outputs the derived amount of fuel injection to the fuel injection control unit 152.

A fuel injection control unit 152 controls the switching valves 126c and 126d (see FIG. 2A) based on information that indicates the amount of fuel injection input from the governor 150 and the crank angle signal from the rotary encoder 130.

The exhaust control unit 154 outputs an exhaust valve operating signal to the exhaust valve driving device 118 based on a signal relating to the amount of fuel injection from the fuel injection control unit 152 and the crank angle signal from the rotary encoder 130.

Hereinafter, the operation of each control unit in the engine cycle of the uniflow scavenging two-cycle engine 100 will be described.

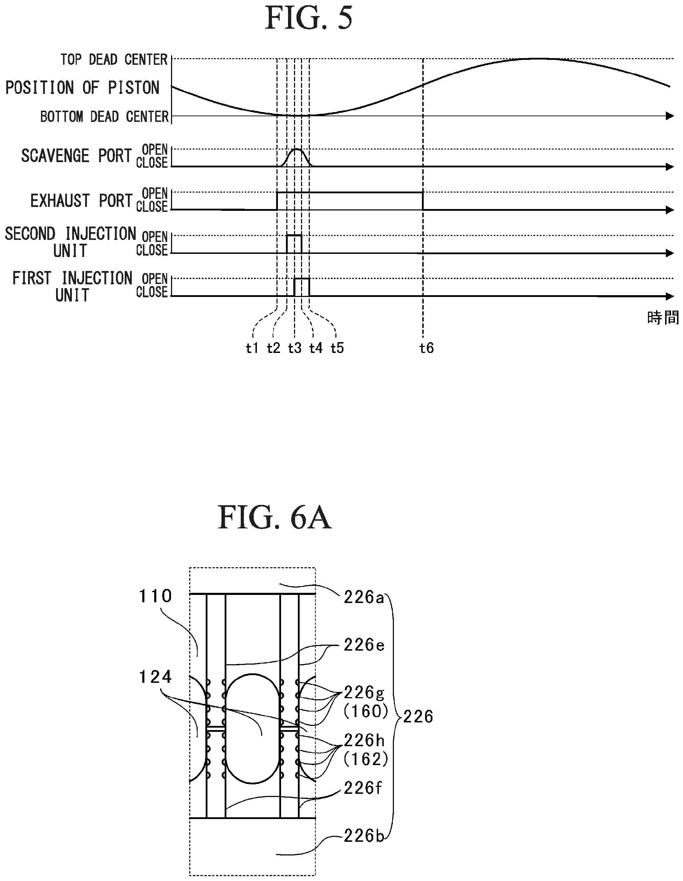

FIG. 5 is a diagram showing the operation of the control unit. As shown in FIG. 5, in the exhaust stroke after the combustion stroke, the exhaust port 116 and the scavenge port 122 are in the closed state, and the exhaust gas is filled in the combustion chamber 140 (within the cylinder 110).

When the piston 112 moves downward and approaches the bottom dead center, with explosive pressure generated by the combustion action of the combustion chamber 140, the exhaust control unit 154 opens the exhaust valve 120 through the exhaust valve driving device 118, and the scavenge port 122 is opened according to the sliding operation of the piston 112 (t1 in FIG. 5). Then, the active gas is sucked from the scavenge ports 122.

The fuel injection control unit 152 opens the switching valves 126c the 126d, based on the information indicating the amount of fuel injection input from the governor 150, and the engine rotational speed derived by the crank angle signal from the rotary encoder 130, thereby injecting the premixed gas into the radially outer side of the cylinder 110 of the scavenge port 122 from the fuel injection unit 126. Thus, the premixed gas is contained in the active gas before being sucked to the scavenge port 122.

At this time, the fuel injection control unit 152 opens the switching valve 126c to initiate the injection of the premixed gas from the second injection unit group 162 (t2 shown in FIG. 5), and successively, the fuel injection control unit 152 opens the switching valve 126d to initiate the injection of the premixed gas from the first injection unit group 160 (t3 shown in FIG. 5).

The premixed gas rises, while forming a swirl for promoting the mixing between the active gas and the fuel gas contained in the premixed gas, and pushes the exhaust gas of the combustion chamber 140 (within the cylinder 110) from the exhaust port 116.

In the compression stroke in which the piston 112 rises toward the top dead center from the bottom dead center, the fuel injection control unit 152 closes the switching valve 126c to stop the injection of the premixed gas from the second injection unit group 162 (t4 shown in FIG. 5), and successively, the fuel injection control unit 152 closes the switching valve 126d to stop the injection of the premixed gas from the first injection unit group 160 (t5 shown in FIG. 5).

Thereafter, the scavenge port 122 is closed, and the suction of the active gas is stopped. At this time, the exhaust control unit 154 maintains the exhaust valve 120 in the open state, and subsequently, the exhaust gas of the combustion chamber 140 (in the cylinder 110) is discharged from the exhaust port 116 by the rise of the piston 112.

When the piston 112 rises further, the exhaust control unit 154 closes the exhaust valve 120 to close the exhaust port 116 (t6 shown in FIG. 5). Moreover, the explosion is generated by the combustion operation of the combustion chamber 140.

Thus, by combusting the premixed gas in the combustion chamber 140, as described above, the exhaust stroke, the suction stroke, the compression stroke and the combustion stroke are repeated.

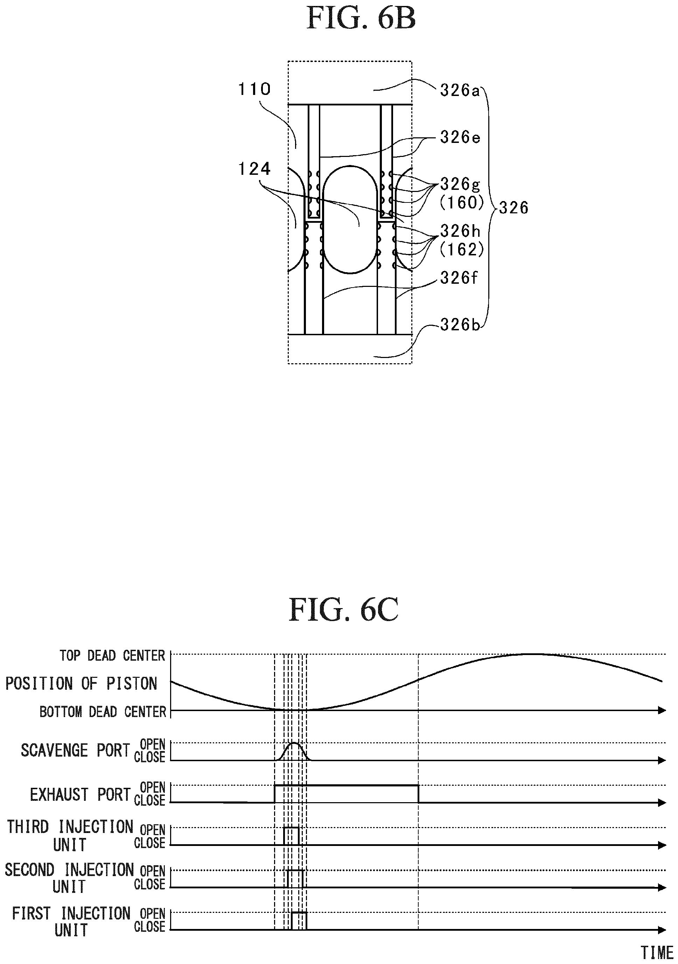

FIGS. 6A to 6C are diagrams showing fuel injection units 226 and 326 in a modified example of the present invention, FIG. 6A shows an enlarged view of a position corresponding to FIG. 3 in a first modified example, FIG. 6B shows an enlarged view of a position corresponding to FIG. 3 in a second modified example, and FIG. 6C shows a diagram corresponding to FIG. 5 in a third modified example.

### (First modified example)

As shown in FIG. 6A, in the fuel injection unit 226, the mixing tube 226a is spaced apart from the scavenge chamber 124 compared to the mixing tube 226b, and the length of the circulation tube 226e becomes longer than that of the circulation tube 226f. That is, the distance from the switching valve 126c to the first injection unit 226g of the first injection unit group 160 is longer than the distance from the switching valve 126d to the second injection unit 226h of the second injection unit group 162.

Therefore, even when the fuel injection control unit 152 simultaneously opens and closes the switching valves 126c and 126d without performing the shifting control of the switching timing of the switching valves 126c and 126d, the injection start and the injection stop of the premixed gas are automatically earlier in the second injection unit group 162 than in the first injection unit group 160. Therefore, the control process of the switching valves 126c and 126d is facilitated, and it is possible to share the control system which controls the switching valves 126c and 126d.

### (Second modified example)

As shown in FIG. 6B, in the fuel injection unit 326, an area of a flow passage in a direction perpendicular to the flow of the premixed gas (the fuel gas) is smaller in the circulation tube 326e than in the circulation tube 326f. That is, in the flow passage of the premixed gas in which the injection unit (the first injection unit 326g and the second injection unit 326h) is used as an outlet end, the flow passage area in the direction perpendicular to the flow of the premix flow is smaller in the first injection unit group 160 than in the second injection unit group 162. When the flow passage area is small, the flow velocity of the premixed gas is delayed by the influence of the pressure loss, and the timing of reaching the injection unit is delayed.

Therefore, similarly to the first modified example, the fuel injection control unit 152 may not perform the shifting control of the switching timing of the switching valves 126c and 126d. Therefore, the control process of the switching valves 126c and 126d is facilitated, and the control system which controls the switching valves 126c and 126d can also be used by branching a common wiring.

### (Third modified example)

In the third modified example, in addition to the first injection unit 126g and the second injection unit 126h, a third injection unit is provided. The third injection unit is disposed on one end side in the stroke direction compared to the second injection unit 126h, and the third injection unit group is formed by the third injection unit. That is, the injection unit is divided into the first injection unit group 160, the second injection unit group 162 and the third injection unit group, based on the boundary of the positions in the two different stroke directions.

As shown in FIG. 6C, the injection of the premixed gas is started in the order of the second injection unit 126h and the first injection unit 126g from the third injection unit of the third injection unit group located on one end side in the stroke direction, and similarly, the injection of the premixed gas is stopped in the order of the second injection unit 126h and the first injection unit 126g from the third injection unit.

Thus, in the third modified example, the injection unit is divided into three sets according to the position in the stroke direction, and the injection stop and the injection start of the premixed gas are later in the set located on the other end side in the stroke direction than in the set located on one end side. According to such a configuration, for each position in the stroke direction, it is possible to control the injection timing of the premixed gas from the injection unit more closely, and the effect of suppressing the blow-by can be improved.

Although preferred embodiments of the present invention have been described with reference to the accompanying drawings, it is needless to say that the invention is not limited to such embodiments. It is obvious to a person skilled in the art that various changes and modifications are conceivable within the scope described in the claims, and are understood as naturally belonging to the technical scope of the present invention.

For example, in the above-described embodiments, a case in which the injection units (the first injection units 126g, 226g and 326g, and the second injection units 126h, 226h and 326h) are openings provided on the outside of the cylinder 110 compared to the inner circumferential surface of the scavenge port 122 has been described. However, the injection units may be openings provided on the inner circumferential surface of the scavenge port 122.

Further, in the above-described embodiments, although the case in which the second injection units 126h, 226h and 326h divided into the second injection unit group 162, and the first injection units 126g, 226g and 326g divided into the first injection unit group 160 are provided by four each in the stroke direction of the piston 112 has been described, the numbers of the first injection units 126g, 226g and 326g and the second injection units 126h, 226h and 326h arranged in the stroke direction of the piston 112 may also be one, or may be plural numbers other than four.

Further, in the above-described embodiments, a case in which both the injection start and the injection stop of the premixed gas (the fuel gas) are later in the first injection units 126g, 226g and 326g of the first injection unit group 160 than in the second injection units 126h, 226h and 326h of the second injection unit group 162 has been described. However, only one of the injection start and the injection stop of the premixed gas may be later in the second injection unit group 162 than in the first injection unit group 160. In this case, it is also possible to suppress the blow-by of the fuel gas.

Moreover, in the above-described embodiments, a case in which the premixed gas of the fuel gas and the active gas are injected toward the active gas, which flows from the scavenge chamber 124 toward the scavenge port 122, from the first injection unit group 160 and the second injection unit group 162 has been described. However, a configuration which generates the premixed gas by injecting only the fuel gas from the first injection unit group 160 and the second injection unit group 162 and by mixing the fuel gas with the active gas in the cylinder 110 may be provided.

### [Industrial Applicability]

The present invention can be utilized in a uniflow scavenging two-cycle engine which combusts the premixed gas generated by injecting the fuel gas into the active gas sucked from the scavenge port.

### [Reference Signs List]

100 Uniflow scavenging two-cycle engine
110 Cylinder
112 Piston
122 Scavenge port
126, 226, 326 Fuel injection unit
126g, 226g, 326g First injection unit injection unit
126h, 226h, 326h Second injection unit injection unit
160 First injection unit group
162 Second injection unit group

## Claims

1. A uniflow scavenging two-cycle engine comprising:
a cylinder (110) inside which a combustion chamber is formed;
a piston (112) which slides within the cylinder (110);
a scavenge port (122) which is provided on a lower side in a vertical direction being a stroke direction of the piston (112) in the cylinder (110), and sucks an active gas into the combustion chamber in accordance with the sliding movement of the piston (112); **characterized in that**
a fuel injection unit (126, 226, 326) which includes: a mixing tube (126a, 226a, 326a, 126b, 226b, 325b) which surrounds the cylinder (110) at a radially outer side thereof in a circumferential direction; and a circulation tube (126e, 226e, 326e, 126f, 226f, 326f) which communicates with the mixing tube (126a, 226a, 326a, 126b, 226b, 325b); and
wherein a plurality of injection units (126g, 226g, 326g, 126h, 226h, 326h) which include openings which inject a fuel gas into the active gas sucked into the scavenge port (122) are provided at different positions in the vertical direction on the circulation tube (126e, 226e, 326e, 126f, 226f, 326f),
the plurality of injection units (126g, 226g, 326g, 126h, 226h, 326h) are divided into at least two sets of injection unit groups include a first injection unit group (160) and a second injection unit group (162), the first injection unit group (160) being a set of one or a plurality of injection units (126g, 226g, 326g), the second injection unit group (162) being a set of one or a plurality of injection units (126h, 226h, 326h) located on the lower side from the first injection unit group (160) in the vertical direction, and
the injection stop of the fuel gas is later in the injection unit (126g, 226g, 326g) of the first injection unit group (160) than in the injection unit (126h, 226h, 432) of the second injection unit group (162).

2. The uniflow scavenging two-cycle engine of claim 1,
wherein the fuel injection unit (226) further includes a switching valve (126c, 126d) which opens and closes a flow passage of the fuel gas supplied to the injection unit (226g, 226h), and
the distance from the switching valve (126c, 126d) to the injection unit (226g, 226h) is longer in the first injection unit group (160) than in the second injection unit group (162).

3. The uniflow scavenging two-cycle engine of claim 1 or claim 2, wherein, in the flow passage of the fuel gas in which the injection unit (326g, 326h) is used as an outlet end, a flow passage area in a direction perpendicular to the flow of the fuel gas is smaller in the first injection unit group (160) than in the second injection unit group (162).

4. The uniflow scavenging two-cycle engine of claim 1, wherein the injection start of the fuel gas is later in the injection unit (126g, 226g, 326g) of the first injection unit group (160) than in the injection unit (126h, 226h, 326h) of the second injection unit group (162) in accordance with timing at which the scavenge port (122) is gradually opened from an upper side to the lower side in the vertical direction by moving downward of the piston (112).

## Patentansprüche

1. Zweitaktmaschine mit Gleichlaufspülung, die Folgendes aufweist:
einen Zylinder (110), in dem ein Brennraum ausgebildet ist;
einen Kolben (112), der innerhalb des Zylinders (110) gleitet;
einen Spülschlitz (122), der an einer unteren Seite in einer Vertikalrichtung vorgesehen ist, die eine Hubrichtung des Kolbens (112) in dem Zylinder (110) ist, und ein Aktivgas in den Brennraum in Übereinstimmung mit der Gleitbewegung des Kolbens (112) saugt; **gekennzeichnet durch**
eine Kraftstoffeinspritzeinheit (126, 226, 326), die Folgendes enthält: ein Mischrohr (126a, 226a, 326a, 126b, 226b, 325b), das den Zylinder (110) an dessen Radialaußenseite in einer Umfangsrichtung umgibt; und ein Umlaufrohr (126e, 226e, 326e, 126f, 226f, 326f), das mit dem Mischrohr (126a, 226a, 326a, 126b, 226b, 325b) in Verbindung steht; und
wobei eine Vielzahl von Einspritzeinheiten (126g, 226g, 326g, 126h, 226h, 326h), die Öffnungen enthalten, die ein Brenngas in das in den Spülschlitz (122) gesaugte Aktivgas einspritzen, an in der Vertikalrichtung verschiedenen Positionen an dem Umlaufrohr (126e, 226e, 326e, 126f, 226f, 326f) vorgesehen sind,
die Vielzahl von Einspritzeinheiten (126g, 226g, 326g, 126h, 226h, 326h) in mindestens zwei Sätze von Einspritzeinheitgruppen aufgeteilt ist, die eine erste Einspritzeinheitgruppe (160) und eine zweite Einspritzeinheitgruppe (162) enthalten, wobei die erste Einspritzeinheitgruppe (160) ein Satz aus einer oder einer Vielzahl von Einspritzeinheiten (126g, 226g, 326g) ist, die zweite Einspritzeinheitgruppe (162) ein Satz aus einer oder einer Vielzahl von Einspritzeinheiten (126h, 226h, 326h) ist, der an der in der Vertikalrichtung unteren Seite der ersten Einspritzeinheitgruppe (160) gelegen ist, und
der Einspritzstopp des Brenngases in der Einspritzeinheit (126g, 226g, 326g) der ersten Einspritzeinheitgruppe (160) später als in der Einspritzeinheit (126h, 226h, 432) der zweiten Einspritzeinheitgruppe (162) ist.

2. Zweitaktmaschine mit Gleichlaufspülung gemäß Anspruch 1,
wobei die Kraftstoffeinspritzeinheit (226) des Weiteren ein Schaltventil (126c, 126d) enthält, das einen Strömungskanal des der Einspritzeinheit (226g, 226h) zugeführten Brenngases öffnet und schließt, und
der Abstand von dem Schaltventil (126c, 126d) zu der Einspritzeinheit (226g, 226h) in der ersten Einspritzeinheitgruppe (160) länger als in der zweiten Einspritzeinheitgruppe (162) ist.

3. Zweitaktmaschine mit Gleichlaufspülung gemäß Anspruch 1 oder Anspruch 2, wobei in dem Strömungskanal des Brenngases, in dem die Einspritzeinheit (326g, 326h) als ein Auslassende verwendet wird, eine Strömungskanalfläche in einer zu der Strömung des Brenngases senkrechten Richtung in der ersten Einspritzeinheitgruppe (160) kleiner als in der zweiten Einspritzeinheitgruppe (162) ist.

4. Zweitaktmaschine mit Gleichlaufspülung gemäß Anspruch 1, wobei der Einspritzbeginn des Brenngases in der Einspritzeinheit (126g, 226g, 326g) der ersten Einspritzeinheitgruppe (160) später als in der Einspritzeinheit (126h, 226h, 326h) der zweiten Einspritzeinheitgruppe (162) in Übereinstimmung mit einer Zeitabstimmung ist, an der der Spülschlitz (122) von einer oberen Seite zu der unteren Seite in der Vertikalrichtung durch eine Abwärtsbewegung des Kolbens (112) allmählich geöffnet wird.

## Revendications

1. Moteur à deux temps à balayage équicourant comprenant :
un cylindre (110) à l'intérieur duquel est formée une chambre de combustion ;
un piston (112) qui coulisse à l'intérieur du cylindre (110) ;
un orifice de balayage (122) qui est prévu sur un côté inférieur dans une direction verticale qui est une direction de course du piston (112) dans le cylindre (110), et aspire un gaz actif dans la chambre de combustion selon le mouvement coulissant du piston (112) ; **caractérisé en ce que** :
une unité d'injection de carburant (126, 226, 326) qui comprend : un tube de mélange (126a, 226a, 326a, 126b, 226b, 325b) qui entoure le cylindre (110) au niveau de son côté radialement externe dans une direction circonférentielle ; et un tube de circulation (126e, 226e, 326e, 126f, 226f, 326f) qui communique avec le tube de mélange (126a, 226a, 326a, 126b, 226b, 325b) ; et
dans lequel une pluralité d'unités d'injection (126g, 226g, 326g, 126h, 226h, 326h) qui comprennent des ouvertures qui injectent un gaz combustible dans le gaz actif aspiré dans l'orifice de balayage (122), sont prévues dans différentes positions dans la direction verticale sur le tube de circulation (126e, 226e, 326e, 126f, 226f, 326f),
la pluralité d'unités d'injection (126g, 226g, 326g, 126h, 226h, 326h) sont divisées en au moins deux ensembles de groupes d'unité(s) d'injection qui comprennent un premier groupe d'unité(s) d'injection (160) et un second groupe d'unité(s) d'injection (162), le premier groupe d'unité(s) d'injection (160) étant un ensemble d'une ou d'une pluralité d'unités d'injection (126g, 226g, 326g), le second groupe d'unité(s) d'injection (162) étant un ensemble d'une ou d'une pluralité d'unités d'injection (126h, 226h, 326h) positionnées sur le côté inférieur à partir du premier groupe d'unité(s) d'injection (160) dans la direction verticale, et
l'arrêt d'injection du gaz combustible a lieu plus tard dans l'unité d'injection (126g, 226g, 326g) du premier groupe d'unité(s) d'injection (160) que dans l'unité d'injection (126h, 226h, 432) du second groupe d'unité(s) d'injection (162).

2. Moteur à deux temps à balayage équicourant selon la revendication 1,
dans lequel l'unité d'injection de carburant (226) comprend en outre une valve de commutation (126c, 126d) qui ouvre et ferme un passage d'écoulement du gaz combustible amené à l'unité d'injection (226g, 226h), et
la distance allant de la valve de commutation (126c, 126d) à l'unité d'injection (226g, 226h) est plus longue dans le premier groupe d'unité(s) d'injection (160) que dans le second groupe d'unité(s) d'injection (162).

3. Moteur à deux temps à balayage équicourant selon la revendication 1 ou la revendication 2, dans lequel, dans le passage d'écoulement du gaz combustible dans lequel l'unité d'injection (326g, 326h) est utilisée en tant qu'extrémité de sortie, une zone de passage d'écoulement dans une direction perpendiculaire à l'écoulement du gaz combustible est moins importante dans le premier groupe d'unité(s) d'injection (160) que dans le second groupe d'unité(s) d'injection (162).

4. Moteur à deux temps à balayage équicourant selon la revendication 1, dans lequel le début d'injection du gaz combustible a lieu plus tard dans l'unité d'injection (126g, 226g, 326g) du premier groupe d'unité(s) d'injection (160) que dans l'unité d'injection (126h, 226h, 326h) du second groupe d'unité(s) d'injection (162) selon le calage auquel l'orifice de balayage (122) est progressivement ouvert à partir d'un côté supérieur jusqu'au côté inférieur dans la direction verticale en déplaçant le piston (112) vers le bas.
